(19) Europäisches Patentamt
European Patent Office
Office européen des brevets

(11) **EP 4 489 130 A1**

(12) **EUROPEAN PATENT APPLICATION**
published in accordance with Art. 153(4) EPC

(43) Date of publication:
**08.01.2025 Bulletin 2025/02**

(21) Application number: **23759721.6**

(22) Date of filing: **10.02.2023**

(51) International Patent Classification (IPC):
***H01M 4/525*** *(2010.01)* ***C01G 53/00*** *(2006.01)*
***H01M 4/36*** *(2006.01)* ***H01M 4/505*** *(2010.01)*
***H01M 10/052*** *(2010.01)* ***H01M 10/058*** *(2010.01)*

(52) Cooperative Patent Classification (CPC):
**C01G 53/00; H01M 4/36; H01M 4/505; H01M 4/525; H01M 10/052; H01M 10/058;** Y02E 60/10

(86) International application number:
**PCT/JP2023/004520**

(87) International publication number:
**WO 2023/162717 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 JP 2022028825**

(71) Applicant: **Panasonic Intellectual Property Management Co., Ltd.**
**Kadoma-shi, Osaka 571-0057 (JP)**

(72) Inventors:
- **KAWAKITA, Akihiro**
  **Kadoma-shi, Osaka 571-0057 (JP)**
- **DEGUCHI, Masaki**
  **Kadoma-shi, Osaka 571-0057 (JP)**
- **INOUE, Katsuya**
  **Kadoma-shi, Osaka 571-0057 (JP)**
- **OGASAWARA, Takeshi**
  **Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE ACTIVE MATERIAL FOR NONAQUEOUS ELECTROLYTE SECONDARY BATTERIES, POSITIVE ELECTRODE FOR NONAQUEOUS ELECTROLYTE SECONDARY BATTERIES, NONAQUEOUS ELECTROLYTE SECONDARY BATTERY, AND METHOD FOR PRODUCING POSITIVE ELECTRODE ACTIVE MATERIAL FOR NONAQUEOUS ELECTROLYTE SECONDARY BATTERIES**

(57) The present invention provides a positive electrode active material which is capable of suppressing an increase in the direct-current resistance caused by repeated charging and discharging. This positive electrode active material, which is contained in nonaqueous electrolyte secondary batteries, contains a lithium-containing composite oxide that has a layered rock salt structure and a sulfonic acid compound that is present on the surface of the lithium-containing composite oxide; the lithium-containing composite oxide contains 25% by mole to 75% by mole of Ni, 15% by mole to 40% by mole of Co and 5% by mole to 50% by mole of Mn relative to the total number of moles of metal elements other than Li; and the sulfonic acid compound is represented by general formula I. (In the formula, A represents a group 1 element or a group 2 element; R represents a hydrocarbon group; and n is 1 or 2.)

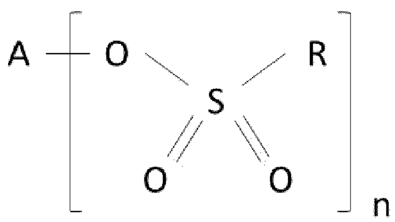

(I)

EP 4 489 130 A1

## Figure 1

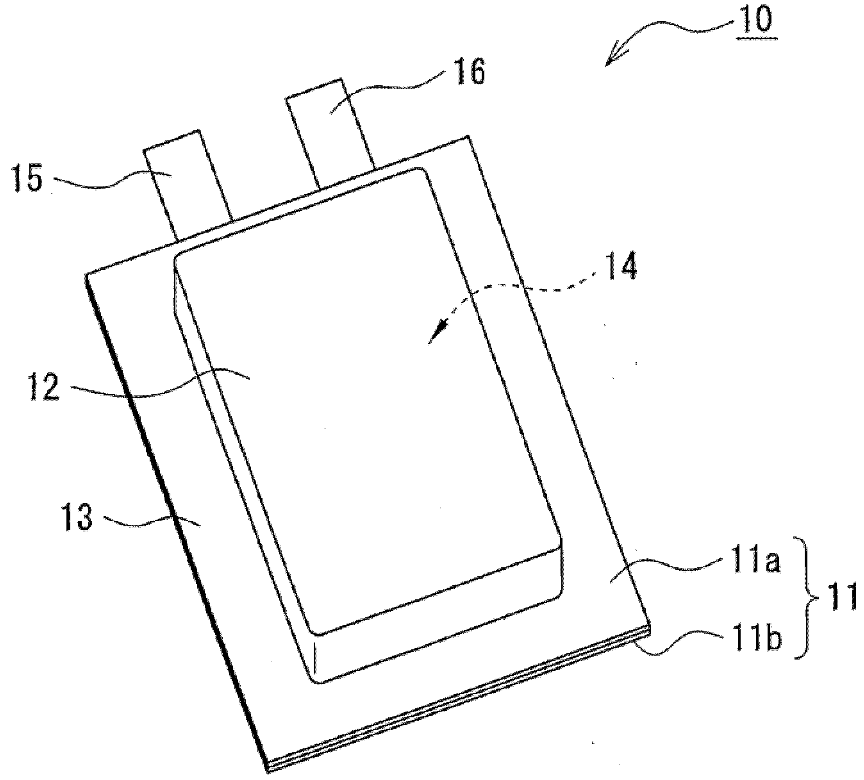

## Description

TECHNICAL FIELD

The present disclosure relates to a positive electrode active material for a non-aqueous electrolyte secondary battery, a positive electrode for a non-aqueous electrolyte secondary battery, a non-aqueous electrolyte secondary battery, and a method for manufacturing a positive electrode active material for a non-aqueous electrolyte secondary battery.

BACKGROUND ART

In recent years, non-aqueous electrolyte secondary batteries have been widely used as a power source for an electric vehicle, a power storage device for utilizing natural energy, and the like. Characteristics required for a positive electrode active material used for the non-aqueous electrolyte secondary battery have also varied depending on the use. For example, Patent Literature 1 discloses a positive electrode active material in which a lithium sulfonate salt compound adheres to a surface of lithium titanate, and describes that this positive electrode active material has excellent storage characteristics at high temperature.

CITATION LIST

PATENT LITERATURE

PATENT LITERATURE 1: Japanese Unexamined Patent Application Publication No. 2018-6164

SUMMARY

It is commonly known that resistance of a lithium-containing composite oxide can be reduced by containing a relatively large amount of Co. However, a secondary battery using the lithium-containing composite oxide containing Co may increase direct-current resistance (DCIR) due to repeated charge and discharge. The art of Patent Literature 1 does not consider inhibition of the increase in DCIR, and still has room for improvement.

It is an advantage of the present disclosure to provide a positive electrode active material that can inhibit the increase in the direct-current resistance (DCIR) due to repeated charge and discharge.

A positive electrode active material for a non-aqueous electrolyte secondary battery of an aspect of the present disclosure includes: a lithium-containing composite oxide having a layered rock-salt structure; and a sulfonate compound present on a surface of the lithium-containing composite oxide, wherein the lithium-containing composite oxide contains greater than or equal to 25 mol% and less than or equal to 75 mol% of Ni, greater than or equal to 15 mol% and less than or equal to 40 mol% of Co, and greater than or equal to 5 mol% and less than or equal to 50 mol% of Mn, relative to a total number of moles of metal elements excluding Li, and the sulfonate compound is represented by the following formula I:

[Formula 1]

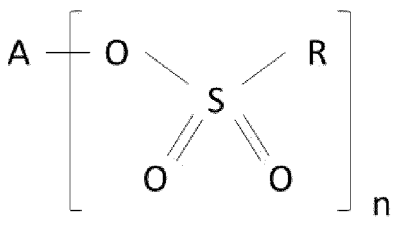

(I)

wherein A represents a group I element or a group II element, R represents a hydrocarbon group, and "n" represents 1 or 2.

A method for manufacturing a positive electrode active material for a non-aqueous electrolyte secondary battery of an aspect of the present disclosure includes: a synthesis step of mixing and calcining: a metal oxide containing greater than or equal to 25 mol% and less than or equal to 75 mol% of Ni, greater than or equal to 15 mol% and less than or equal to 40 mol% of Co, and greater than or equal to 5 mol% and less than or equal to 50 mol% of Mn; and a Li compound to obtain a lithium-containing composite oxide; and an adding step of adding at least one of a sulfonate compound solution and a sulfonic acid solution to the lithium-containing composite oxide.

A positive electrode for a non-aqueous electrolyte secondary battery of an aspect of the present disclosure

includes the above positive electrode active material.

A non-aqueous electrolyte secondary battery of an aspect of the present disclosure comprises: the above positive electrode; a negative electrode; and a non-aqueous electrolyte.

According to the positive electrode active material for a non-aqueous electrolyte secondary battery of an aspect of the present disclosure, the increase in the DCIR due to repeated charge and discharge can be inhibited.

## BRIEF DESCRIPTION OF DRAWING

FIG. 1 is a perspective view of a non-aqueous electrolyte secondary battery of an example of an embodiment.
FIG. 2 is a perspective view and sectional view of an electrode assembly of an example of an embodiment.

## DESCRIPTION OF EMBODIMENTS

A layered rock-salt structure of a lithium-containing composite oxide includes a transition metal layer including a transition metal such as Ni and Co, a Li layer, and an oxygen layer, and by the Li layer reversibly intercalating and deintercalating Li ions present therein, charge-discharge reactions of a battery proceed. It is commonly known that a lithium-containing composite oxide containing a relatively large amount of Co is a positive electrode active material having low resistance. When the lithium-containing composite oxide contains greater than or equal to 25 mol% and less than or equal to 75 mol% of Ni, greater than or equal to 15 mol% and less than or equal to 40 mol% of Co, and greater than or equal to 5 mol% and less than or equal to 50 mol% of Mn, relative to a total number of moles of metal elements excluding Li, both of increase in a capacity and reduction in resistance can be achieved. However, a secondary battery using such a lithium-containing composite oxide may increase direct-current resistance (DCIR) due to repeated charge and discharge.

Accordingly, the present inventors have made intensive investigation to solve the above problem, and consequently found that the increase in the DCIR in a charge-discharge cycle can be inhibited by allowing a sulfonate compound represented by the general formula I to be present on a surface of the lithium-containing composite oxide. It is presumed that a specific coating derived from the sulfonate compound is generated on the surface of the lithium-containing composite oxide, and insertion and extraction of Li are facilitated even after the cycle to inhibit the increase in the DCIR.

[Formula 2]

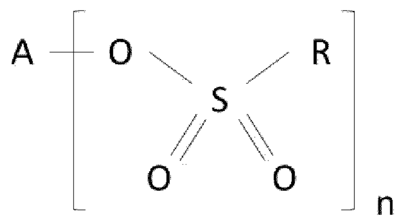

(I)

In the formula, A represents a group I element or a group II element, R represents a hydrocarbon group, and "n" represents 1 or 2.

Hereinafter, an example of an embodiment of the present disclosure will be described in detail with reference to the drawings, but the present disclosure is not limited to the embodiments described below. Hereinafter, a laminate battery comprising an exterior composed of a laminate sheet will be exemplified, but the non-aqueous electrolyte secondary battery according to the present disclosure may be a cylindrical battery comprising a cylindrical exterior housing can, a rectangular battery comprising a rectangular exterior housing can, or the like. As described later, the non-aqueous electrolyte secondary battery preferably has a plain part so that a pressure is applied in a stacking direction of a positive electrode and a negative electrode, which constitute an electrode assembly.

FIG. 1 is a perspective view of a non-aqueous electrolyte secondary battery 10. The non-aqueous electrolyte secondary battery 10 comprises an electrode assembly 14 and a non-aqueous electrolyte, which are housed in a housing part 12 of an exterior 11. The exterior 11 is composed of laminate sheets 11a and 11b. For the laminate sheets 11a and 1 1b, a sheet in which a metal layer and a resin layer are laminated is used, for example. The laminate sheets 11a and 11b have, for example, two of the resin layers sandwiching the metal layer, and one of the resin layers is composed of a resin that may be subjected to thermocompression. Examples of the metal layer include an aluminum layer.

The non-aqueous electrolyte includes, for example, a non-aqueous solvent and an electrolyte salt dissolved in the non-aqueous solvent. As the non-aqueous solvent, carbonates, lactones, ethers, ketones, esters, and the like may be used, and two or more of these solvents may be mixed for use. When two or more of the solvents are mixed for use, a mixed

solvent including a cyclic carbonate and a chain carbonate is preferably used. For example, ethylene carbonate (EC), propylene carbonate (PC), butylene carbonate (BC), or the like may be used as the cyclic carbonate, and dimethyl carbonate (DMC), ethyl methyl carbonate (EMC), diethyl carbonate (DEC), or the like may be used as the chain carbonate. As the esters, carbonate esters such as methyl acetate (MA) and methyl propionate (MP) are preferably used. The non-aqueous solvent may contain a halogen-substituted derivative in which hydrogen atoms of these solvents are at least partially substituted with a halogen atom such as fluorine. As the halogen-substituted derivative, fluoroethylene carbonate (FEC), methyl fluoropropionate (FMP), and the like are preferably used, for example. As the electrolyte salt, $LiPF_6$, $LiBF_4$, $LiCF_3SO_3$, lithium bis(fluorosulfonyl)imide, lithium bis(trifluoromethanesulfonyl)imide, and the like, and a mixture thereof may be used. The amount of the electrolyte salt to be dissolved in the non-aqueous solvent is, for example, greater than or equal to 0.5 mol/L and less than or equal to 2.0 mol/L. The non-aqueous electrolyte is not limited to a liquid electrolyte, but may be a solid electrolyte using a gel polymer or the like.

The exterior 11 has, for example, a plane-viewed substantially rectangular shape. A sealing part 13, which is formed on the exterior 11 by bonding the laminate sheets 11a and 11b each other, seals the housing part 12 housing the electrode assembly 14. The sealing part 13 is formed along an edge of the exterior 11 in a frame shape with a substantially same width. A part surrounded by the sealing part 13 and having the plane-viewed substantially rectangular shape is the housing part 12. The housing part 12 is provided by forming a cavity that can house the electrode assembly 14 on at least one of the laminate sheets 11a and 11b. In the present embodiment, this cavity is formed on the laminate sheet 11a.

The non-aqueous electrolyte secondary battery 10 comprises a pair of electrode leads (a positive electrode lead 15 and a negative electrode lead 16) connected to the electrode assembly 14. Each electrode lead is drawn out from an inside to outside of the exterior 11. In the example illustrated in FIG. 1, each electrode lead is drawn out through the same edge side of the exterior 11 in substantially parallel each other. Both of the positive electrode lead 15 and the negative electrode lead 16 are conductive thin plates. For example, the positive electrode lead 15 is composed of a metal mainly composed of aluminum, and the negative electrode lead 16 is composed of a metal mainly composed of copper or nickel.

FIG. 2 is a perspective view and a view illustrating a part of a cross section (cross section with the AA line) of the electrode assembly 14. As exemplified in FIG. 2, the electrode assembly 14 has an elongated positive electrode 20, an elongated negative electrode 30, and a separator 40 interposed between the positive electrode 20 and the negative electrode 30. The electrode assembly 14 is formed by winding the positive electrode 20 and the negative electrode 30 via the separator 40. To prevent precipitation of lithium, the negative electrode 30 is formed to be one size larger than the positive electrode 20. The electrode assembly may be a stacked electrode assembly in which a plurality of the positive electrodes and a plurality of the negative electrodes are stacked via the separator.

To the non-aqueous electrolyte secondary battery 10, a pressure (hereinafter, referred to as "constitutive pressure") of greater than or equal to $8\times10^{-2}$ MPa is preferably applied. This can inhibit cracking of a positive electrode active material due to expansion and contraction to inhibit decrease in the battery capacity due to repeated charge and discharge. The constitutive pressure is preferably applied in a stacking direction of the positive electrode 20 and the negative electrode 30, and in the example in FIG. 1, the constitutive pressure is preferably applied from the upper-lower direction. An upper limit of the constitutive pressure is, for example, 30 MPa.

Hereinafter, the positive electrode 20, the negative electrode 30, and the separator 40, which constitute the electrode assembly 14, specifically a positive electrode active material included in a positive electrode mixture layer 22 constituting the positive electrode 20, will be described in detail with reference to FIG. 2.

[Positive Electrode]

The positive electrode 20 has a positive electrode current collector 21 and a positive electrode mixture layer 22 formed on a surface of the positive electrode current collector 21. The positive electrode mixture layer 22 is preferably formed on both surfaces of the positive electrode current collector 21. For the positive electrode current collector 21, a foil of a metal stable within a potential range of the positive electrode 20, such as aluminum and an aluminum alloy, a film in which such a metal is disposed on a surface layer thereof, and the like can be used. The positive electrode mixture layer 22 may include the positive electrode active material, a conductive agent, and a binder. A thickness of the positive electrode mixture layer 22 is, for example, greater than or equal to 10 μm and less than or equal to 150 μm on one side of the positive electrode current collector 21. The positive electrode 20 can be produced by, for example, applying a positive electrode mixture slurry including the positive electrode active material, the conductive agent, the binder, and the like on the surface of the positive electrode current collector 21, and drying and subsequently compressing the coating film to form the positive electrode mixture layer 22 on both surfaces of the positive electrode current collector 21.

Examples of the conductive agent included in the positive electrode mixture layer 22 may include a carbon-based material such as carbon black (CB), acetylene black (AB), Ketjenblack, carbon nanotube (CNT), graphite, and graphite. These may be used singly, or may be used in combination of two or more thereof.

Examples of the binder included in the positive electrode mixture layer 22 include a fluororesin such as polytetrafluoroethylene (PTFE) and polyvinylidene fluoride (PVDF), polyacrylonitrile (PAN), a polyimide resin, an acrylic

resin, a polyolefin resin. These may be used singly, or may be used in combination of two or more thereof.

The positive electrode active material included in the positive electrode mixture layer 22 includes a lithium-containing composite oxide and a sulfonate compound present on a surface of this lithium-containing composite oxide. The lithium-containing composite oxide includes, for example, secondary particles formed by aggregation of primary particles. Here, the surface of the lithium-containing composite oxide means surfaces of the secondary particles of the lithium-containing composite oxide or an interface on which the primary particles are contacted with each other. That is, the sulfonate compound is present on the surfaces of the secondary particles of the lithium-containing composite oxide or the interface on which the primary particles are contacted with each other.

A particle diameter of the primary particles constituting the secondary particles of the lithium-containing composite oxide is, for example, greater than or equal to 0.02 μm and less than or equal to 2 μm. The particle diameter of the primary particles is measured as a diameter of a circumscribed circle in a particle image observed with a scanning electron microscope (SEM). An average particle diameter of the secondary particles of the lithium-containing composite oxide is, for example, greater than or equal to 2 μm and less than or equal to 30 μm. Here, the average particle diameter means a median diameter (D50) on a volumetric basis. The D50 means a particle diameter at which a cumulative frequency is 50% from a smaller particle diameter side in a particle size distribution on a volumetric basis. The particle size distribution of the secondary particles of the lithium-containing composite oxide can be measured by using a laser diffraction-type particle size distribution measuring device (for example, MT3000II, manufactured by MicrotracBEL Corp.) with water as a dispersion medium.

The lithium-containing composite oxide has a layered rock-salt structure. Examples of the layered rock-salt structure of the lithium-containing composite oxide include a layered rock-salt structure belonging to the space group R-3m and a layered rock-salt structure belonging to the space group C2/m. The lithium-containing composite oxide preferably has the layered rock-salt structure belonging to the space group R-3m from the viewpoints of increase in the capacity and stability of the crystal structure. The layered rock-salt structure of the lithium-containing composite oxide may include a layer of transition metal, a Li layer, and an oxygen layer.

The lithium-containing composite oxide contains greater than or equal to 25 mol% and less than or equal to 75 mol% of Ni, greater than or equal to 15 mol% and less than or equal to 40 mol% of Co, and greater than or equal to 5 mol% and less than or equal to 50 mol% of Mn, relative to a total number of moles of metal elements excluding Li. The content rate of the metal element contained in the lithium-containing composite oxide is measured by, for example, inductively coupled plasma (ICP) atomic emission spectrometry.

In the lithium-containing composite oxide, setting the content rate of Ni to be greater than or equal to 25 mol% and less than or equal to 75 mol% and setting the content rate of Co to be greater than or equal to 15 mol% and less than or equal to 40 mol% yield the battery with a high capacity and low resistance. Setting the content rate of Mn in the lithium-containing composite oxide to be greater than or equal to 5 mol% and less than or equal to 50 mol% can stabilize the crystal structure of the lithium-containing composite oxide.

The lithium-containing composite oxide may be a composite oxide represented by the general formula $Li_aNi_xCo_yMn_zM1_wC_{2-b}$, wherein $0.8 \leq a \leq 1.2$, $0.25 \leq x \leq 0.75$, $0.15 \leq y \leq 0.40$, $0.05 \leq z \leq 0.50$, $0 \leq w \leq 0.15$, $0 \leq b < 0.05$, $x+y+z+w=1$, and M1 represents at least one or more elements selected from the group consisting of Al, Fe, Ti, Si, Nb, Zr, Mo, and Zn.

The sulfonate compound present on the surface of the lithium-containing composite oxide is represented by the following general formula I:

[Formula 3]

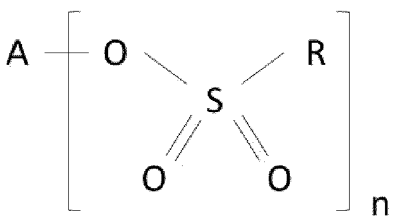

(I)

wherein A represents a group I element or a group II element, R represents a hydrocarbon group, and "n" represents 1 or 2.

In the general formula I, A preferably represents a group I element, and more preferably represents Li. This allows the effect of inhibiting the increase in the DCIR to be more remarkable. When A represents a group I element, n=1.

In the general formula I, R preferably represents an alkyl group. R more preferably represents an alkyl group having less than or equal to 5 carbon atoms, further preferably represents an alkyl group having less than or equal to 3 carbon atoms, and particularly preferably represents a methyl group. Some of hydrogen bonded to carbon in R may be replaced with fluorine. Note that, not all hydrogen bonded to carbon in R are replaced with fluorine. A smaller molecular

weight of R can further reduce reaction resistance.

Examples of the sulfonate compound include lithium methanesulfonate, lithium ethanesulfonate, lithium propanesulfonate, sodium methanesulfonate, magnesium methanesulfonate, and lithium fluoromethanesulfonate.

An amount of the sulfonate compound present on the surface of the lithium-containing composite oxide is preferably greater than or equal to 0.1 mass% and less than or equal to 1 mass%, and more preferably greater than or equal to 0.3 mass% and less than or equal to 0.8 mass% relative to a mass of the lithium-containing composite oxide.

The presence of the sulfonate compound on the surface of the lithium-containing composite oxide can be confirmed by Fourier transformation infrared spectrometry (FT-IR). In an infrared absorption spectrum obtained by FT-IR, the positive electrode active material may have an absorption peak at least greater than or equal to one of positions near 1238 $cm^{-1}$, 1175 $cm^{-1}$, 1065 $cm^{-1}$, and 785 $cm^{-1}$.

In the infrared absorption spectrum obtained by FT-IR, for example, the positive electrode active material including lithium methanesulfonate has absorption peaks near 1238 $cm^{-1}$, 1175 $cm^{-1}$, 1065 $cm^{-1}$, and 785 $cm^{-1}$. The peaks near 1238 $cm^{-1}$, 1175 $cm^{-1}$, and 1065 $cm^{-1}$ are absorption peaks attributed to an SO stretching vibration derived from lithium methanesulfonate. The peak near 785 $cm^{-1}$ is an absorption peak attributed to a CS stretching vibration derived from lithium methanesulfonate.

In the positive electrode active material including a sulfonate compound other than lithium methanesulfonate, the absorption peak derived from the sulfonate compound included in the positive electrode active material can be identified similarly to the positive electrode active material including lithium methanesulfonate. The presence of the sulfonate compound on the surface of the lithium-containing composite oxide can also be confirmed by ICP, atomic absorption, X-ray photoelectron spectrometry (XPS), radiation XRD measurement, TOF-SIMS, and the like.

An average particle diameter of the sulfonate compound is preferably less than or equal to 10 μm, more preferably less than or equal to 5 μm, and further preferably less than or equal to 3 μm. By setting the average particle diameter of the sulfonate compound to preferably less than or equal to 10 μm, more preferably less than or equal to 5 μm, and further preferably less than or equal to 3 μm, the sulfonate compound can be present on an entirety of the positive electrode active material powder more uniformly, and the effect by the sulfonate compound can be exhibited more remarkably. A lower limit of the average particle diameter of the sulfonate compound is, for example, 0.1 μm. Here, the average particle diameter of the sulfonate compound can be determined by observing the sulfonate compound present on the surface of the lithium-containing composite oxide with an SEM. Specifically, outer shapes of randomly selected 50 particles are specified, and a major diameter (the longest diameter) of each of the 50 particles is determined to specify an average value thereof as the average particle diameter of the sulfonate compound.

On the surface of the lithium-containing composite oxide, a metal compound may be present. The metal compound includes, for example, one or more metal elements selected from the group consisting of Sr, Ca, W, Zr, rare-earth elements, and Al. Examples of the compound containing Sr may include SrO, $Sr(OH)_2$, and SrCOs. Examples of the compound containing Ca may include CaO, $Ca(OH)_2$, and CaCOs. Examples of the compound containing W may include $WO_3$. Examples of the compound containing Al may include $Al_2O_3$. Examples of the compound containing Zr may include $ZrO_2$, $Zr(OH)_4$, $Zr(CO_3)_2$, and $Zr(SO_4)_2{\cdot}4H_2O$. Examples of the compound containing the rare earth element may include an oxide, a hydroxide, a carbonate salt, a sulfate salt, a nitrate salt, and a phosphate salt of the rare earth elements. The metal compound may contain a plurality of types of these metal elements, and examples thereof may include $SrAlO_4$ and $CaAlO_4$. The metal compound may further contain Li, and examples thereof may include lithium tungstate.

On the surface of the lithium-containing composite oxide, a nonmetallic compound may be present. The nonmetallic compound includes, for example, one or more nonmetallic elements selected from the group consisting of P and B. Examples of the compound containing P may include $Li_{3-x}H_xPO_4$ ($0 \leq x \leq 3$). Examples of the compound containing B may include $H_3BO_3$, $Li_3BO_3$, and $Li_2B_4O_7$.

As for the positive electrode active material, when a filtrate of a water dispersion in which 1 g of the positive electrode active material is dispersed in 70 ml of pure water is titrated with hydrochloric acid, a value of Y-X is preferably less than or equal to 130 μmol/g, more preferably less than or equal to 100 μmol/g, and further preferably less than or equal to 60 μmol/g, wherein an amount of the consumed acid until a first inflection point on the pH curve is represented by X mol/g, and an amount of the consumed acid until a second inflection point is represented by Y mol/g. A value of X-(Y-X) is preferably less than or equal to 130 μmol/g, more preferably less than or equal to 100 μmol/g, and further preferably less than or equal to 60 μmol/g. That is, the positive electrode active material may include a slight amount of a water-soluble alkaline component titrated with an acid. When the amount of the alkaline component included in the positive electrode active material is small, stability of the slurry is improved, leading to improved productivity.

The positive electrode active material includes the alkaline component only at an amount corresponding to the aforementioned amount of the consumed acid. Examples of the alkaline component include lithium hydroxide (LiOH) and lithium carbonate ($Li_2CO_3$). Inside the particles of the composite oxide, lithium carbonate and lithium hydroxide may be present on the interfaces of the primary particles and on the surfaces of the secondary particles formed by aggregation of the primary particles. These are preferably uniformly present without uneven presence on a part of the surfaces of the primary particles.

A specific quantification method of the water-soluble alkaline component extracted from the positive electrode active material is as follows. The following titration method is commonly called "Warder method".

(1) To 30 ml of pure water, 1 g of the positive electrode active material is added, and the mixture is stirred to prepare a suspension in which the active material is dispersed in water.
(2) The suspension is filtered and filled up to 70 ml by adding pure water to obtain a filtrate including the water-soluble alkaline component eluted from the active material.
(3) To the filtrate, hydrochloric acid is gradually added dropwise while measuring a pH of the filtrate to determine the amount of hydrochloric acid (titration amount) X mol/g consumed until the first inflection point (near pH 8) on the pH curve and the amount of hydrochloric acid Y mol/g consumed until the second inflection point (near pH 4). The inflection point is a peak position of a differential value relative to the titration amount.

The positive electrode mixture layer 22 may include another positive electrode active material in addition to the positive electrode active material of the aforementioned present embodiment. Examples of the other positive electrode active material include a lithium-containing composite oxide with a content rate of Ni of greater than 75 mol%.

Next, an example of a method for manufacturing the positive electrode active material according to the present embodiment will be described. The method for manufacturing the positive electrode active material includes, for example, a synthesis step and an adding step.

In the synthesis step, a metal oxide containing greater than or equal to 25 mol% and less than or equal to 75 mol% of Ni, greater than or equal to 15 mol% and less than or equal to 40 mol% of Co, and greater than or equal to 5 mol% and less than or equal to 50 mol% of Mn, and a Li compound are mixed and calcined to obtain the lithium-containing composite oxide.

The metal oxide can be obtained by, for example, while stirring a solution of metal salts including Ni, Co, Mn and the optional metal elements (such as Al and Fe), a solution of an alkali such as sodium hydroxide is added dropwise to adjust a pH on the alkaline side (for example, greater than or equal to 8.5 and less than or equal to 12.5) to precipitate (coprecipitate) a composite hydroxide including Ni, Co, Mn and the optional metal elements, and thermally treating this composite hydroxide. The thermal treatment temperature is not particularly limited, and may be, for example, within a range of greater than or equal to 300°C and less than or equal to 600°C.

Examples of the Li compound include $Li_2CO_3$, LiOH, $Li_2O_2$, $Li_2O$, $LiNO_3$, $LiNCO_2$, $Li_2SO_4$, $LiOH{\cdot}H_2O$, LiH, and LiF. A mixing ratio between the metal oxide and the Li compound is preferably set so that, for example, a mole ratio of the metal elements excluding Li : Li is within a range of greater than or equal to 1:0.98 and less than or equal to 1: 1.1 in terms of facilitation of the aforementioned parameters to be regulated within the aforementioned prescribed ranges. In mixing the metal oxide and the Li compound, another metal raw material may be added as necessary. Here, the other metal raw material refers oxides and the like including a metal element other than the metal elements constituting the metal oxide.

The mixture of the metal oxide and the Li compound is calcined under an oxygen atmosphere, for example. The calcining conditions may be a heating rate within greater than or equal to 450°C and less than or equal to 680°C being within a range of greater than 0.1 °C/min and less than or equal to 5.5 °C/min, and a highest reaching temperature being within a range of greater than or equal to 700°C and less than or equal to 1000°C. A heating rate from greater than 680°C to the highest reaching temperature may be, for example, greater than or equal to 0.1 °C/min and less than or equal to 3.5 °C/min. A holding time at the highest reaching temperature may be greater than or equal to 1 hour and less than or equal to 10 hours. The calcining step may be a multi-step calcination, and a plurality of the first heating rates and the second heating rates may be set in each temperature region as long as the first heating rates and the second heating rates are within the above determined ranges.

In the adding step, at least one of a sulfonate compound solution and a sulfonic acid solution is added to the lithium-containing composite oxide obtained in the synthesis step. This can adhere the sulfonate compound to the surface of the lithium-containing composite oxide. The Li compound remains on the surface of the lithium-containing composite oxide, and thus, the sulfonate compound including Li is formed also when the sulfonic acid solution is added. An amount of the sulfonate compound or the sulfonic acid added is preferably greater than or equal to 0.1 mass% and less than or equal to 1 mass%, and more preferably greater than or equal to 0.3 mass% and less than or equal to 0.8 mass% relative to the mass of the lithium-containing composite oxide. Concentrations of the sulfonic acid solution and the sulfonate compound solution are, for example, greater than or equal to 0.5 mass% and less than or equal to 40 mass%.

The method for adding the sulfonate compound is not limited to the above example. For example, it is also acceptable that the lithium-containing composite oxide obtained in the synthesis step is washed with water, and the sulfonate compound solution, the sulfonic acid solution, or the powdery sulfonate compound is added to the cake-like composition obtained by dehydration. The washing with water and the dehydration can be performed by known methods under known conditions. For example, the cake-like composition may be dried under a vacuum atmosphere at greater than or equal to 150°C and less than or equal to 400°C for greater than or equal to 0.5 hours and less than or equal to 15 hours to produce the lithium-containing composite oxide in which the sulfonate compound is present on the surface.

The metal compound including one or more metal elements selected from the group consisting of Sr, Ca, W, Zr, rare-earth elements, and Al, and the nonmetallic compound including one or more nonmetallic elements selected from the group consisting of P and B can adhere to the surface of the lithium-containing composite oxide by, for example, adding raw materials of the metal compound and the nonmetallic compound in any of in the synthesis step, after the synthesis step, and in the adding step. When the sulfonate compound is added to the cake-like composition, the raw materials of the metal compound and the nonmetallic compound may be added in any of in water washing, after water washing, in drying, and after drying. Examples of the Sr raw material include $Sr(OH)_2$, $Sr(OH)_2.8H_2O$, SrO, $SrCo_3$, $SrSO_4$, $Sr(NO_3)_2$, $SrCl_2$, and $SrAlO_4$. Examples of the Ca raw material include $Ca(OH)_2$, CaO, $CaCO_3$, $CaSO_4$, $Ca(NO_3)_2$, $CaCl_2$, and $CaAlO_4$. Examples of the Zr raw material include $Zr(OH)_4$, $ZrO_2$, $Zr(CO_3)_2$, and $Zr(SO_4)_24H_2O$. Examples of the rare earth raw material include an oxide, a hydroxide, a carbonate salt, and the like of the rare earth elements. Examples of the W raw material may include tungsten oxide ($WO_3$) and lithium tungstate ($Li_2WO_4$, $Li_4WO_5$, and $Li_4W_2O_9$). As the W raw material, a solution containing W may also be used. Although $Al_2O_3$, $Al(OH)_3$, $Al_2(SO_4)_3$, and the like may be used as the Al raw material, Al may be derived from the lithium-containing composite oxide. Examples of the P raw material include $Li_{3-x}H_xPO_4$ ($0 \leq x \leq 3$). Examples of the B raw material include $H_3BO_3$, $Li_3BO_3$, and $Li_2B_4O_7$.

[Negative Electrode]

The negative electrode 30 has a negative electrode current collector 31 and a negative electrode mixture layer 32 formed on a surface of the negative electrode current collector 31. The negative electrode mixture layer 32 is preferably formed on both surfaces of the negative electrode current collector 31. For the negative electrode current collector 31, a foil of a metal stable within a potential range of the negative electrode 30, such as copper and a copper alloy, a film in which such a metal is disposed on a surface layer thereof, and the like may be used. The negative electrode mixture layer 32 may include a negative electrode active material and a binder. A thickness of the negative electrode mixture layer 32 is, for example, greater than or equal to 10 μm and less than or equal to 150 μm on one side of the negative electrode current collector 31. The negative electrode 30 can be produced by, for example, applying a negative electrode mixture slurry including the negative electrode active material, the binder, and the like on the surface of the negative electrode current collector 31, and drying and subsequently compressing the coating film to form the negative electrode mixture layer 32 on both surfaces of the negative electrode current collector 31.

The negative electrode active material included in the negative electrode mixture layer 32 is not particularly limited as long as it can reversibly occlude and release lithium ions, and carbon materials such as graphite are typically used. The graphite may be any of natural graphite such as flake graphite, massive graphite, and amorphous graphite, and artificial graphite such as massive artificial graphite and graphitized mesophase carbon microbead. As the negative electrode active material, a metal that forms an alloy with Li, such as Si and Sn, a metal compound including Si, Sn, and the like, a lithium-titanium composite oxide, and the like may also be used. In addition, those in which a carbon coating is provided on these materials may also be used. For example, a Si-containing compound represented by $SiO_x$ ($0.5 \leq x \leq 1.6$), a Si-containing compound in which Si fine particles are dispersed in a lithium silicate phase represented by $Li_{2y}SiO_{(2+y)}$ ($0<y<2$), or the like may be used in combination with the graphite.

Example of the binder included in the negative electrode mixture layer 32 include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These may be used singly, or may be used in combination of two or more thereof.

[Separator]

For the separator 40, a porous sheet having an ion permeation property and an insulation property is used, for example. Specific examples of the porous sheet include a fine porous thin film, a woven fabric, and a nonwoven fabric. As a material for the separator, a polyolefin such as polyethylene or polypropylene, cellulose, or the like is preferable. The separator 40 may have a single-layer structure or a multi-layer structure. On a surface of the separator 40, a resin layer having high heat resistance, such as an aramid resin, and a filler layer including a filler of an inorganic compound may be provided.

EXAMPLES

Hereinafter, the present disclosure will be further described with Examples and Comparative Examples, but the present disclosure is not limited to the following Examples.

<Example 1>

[Production of Positive Electrode Active Material]

A composite hydroxide obtained by a coprecipitation method and represented by $[Ni_{0.50}Co_{0.20}Mn_{0.30}](OH)_2$ was calcined at 500°C for 8 hours to obtain a metal oxide ($Ni_{0.50}Co_{0.20}Mn_{0.30}O_2$). Then, $Li_2CO_3$ and the above metal oxide were mixed so that a mole ratio between: Li and a total amount of Ni, Co, and Mn was 1.02: 1 to obtain a mixture. This mixture was calcined under an oxygen flow (at a flow rate of 2 mL/min per 10 $cm^3$ and 5 L/min per kilogram of the mixture) at an oxygen concentration of 95% from room temperature to 650°C at a heating rate of 2.0°C/min, and then calcined from 650°C to 850°C at a heating rate of 0.5°C/min to obtain a lithium-containing composite oxide (the synthesis step). To this lithium-containing composite oxide, a lithium methanesulfonate solution at a concentration of 10 mass% was added (the adding step), and thereafter, dried under conditions under a vacuum atmosphere at 180°C for 2 hours to obtain a positive electrode active material of Example 1. An amount of the lithium methanesulfonate added was 0.1 mass% relative to a total mass of the lithium-containing composite oxide. By Fourier transformation infrared spectrometry (FT-IR), the presence of lithium methanesulfonate on the surface of the positive electrode active material was confirmed. The average particle diameter of lithium methanesulfonate was 2 μm. In the positive electrode active material, the value of Y-X was 16 μmol/g, and the value of X-(Y-X) was 18 μmol/g.

[Production of Positive Electrode]

Mixing 92 parts by mass of the positive electrode active material, 5 parts by mass of acetylene black as a conductive agent, and 3 parts by mass of polyvinylidene fluoride as a binder was performed at this ratio, and this mixture was mixed with N-methyl-2-pyrrolidone (NMP) to prepare a positive electrode mixture slurry. Then, this positive electrode mixture slurry was applied on both surfaces of a positive electrode current collector composed of aluminum foil, the coating film was dried, and then the coating film was rolled with a roller, and cut to a predetermined electrode size to produce a positive electrode. At a part of the positive electrode, an exposed portion where the surface of the positive electrode current collector was exposed was provided.

[Production of Negative Electrode]

Mixing 98 parts by mass of artificial graphite, 1 part by mass of sodium carboxymethylcellulose (CMC-Na), and 1 part by mass of styrene-butadiene rubber (SBR) was performed, and an appropriate amount of water was added thereto to prepare a negative electrode mixture slurry. Then, this negative electrode mixture slurry was applied on both surfaces of a negative electrode current collector composed of copper foil, the coating was dried, and then the coating was rolled with a roller and cut to a predetermined electrode size to produce a negative electrode. On a part of the negative electrode, an exposed portion where the surface of the negative electrode current collector was exposed was provided.

[Preparation of Non-Aqueous Electrolyte]

Ethylene carbonate (EC), methyl ethyl carbonate (MEC), and dimethyl carbonate (DMC) were mixed at a volume ratio of 3:3:4. Into this mixed solvent, lithium hexafluorophosphate ($LiPF_6$) was dissolved at a concentration of 1.2 mol/L to prepare a non-aqueous electrolyte.

[Production of Test Cell]

A positive electrode lead was attached to the exposed portion of the positive electrode, and a negative electrode lead was attached to the exposed portion of the negative electrode. The positive electrode and the negative electrode were spirally wound via a separator made of a polyolefin, and then press-formed in a radial direction to produce a flat, wound electrode assembly. This electrode assembly was housed in an exterior composed of an aluminum laminate sheet, the non-aqueous electrolyte liquid was injected thereinto, and then an opening of the exterior was sealed to obtain a test cell.

[Evaluation of DCIR Increasing Rate]

Under a temperature environment of 25°C, the test cell was charged at a constant current of 0.2 C until a cell voltage reached 4.2 V, and then charged at a constant voltage of 4.2 V until a current value reached 0.02 C. After left for stand for 1 hour, the test cell was discharged at a constant current of 0.2 C until the cell voltage reached 2.5 V to prepare an initial state.

Thereafter, under a temperature environment of 25°C, the test cell in the initial state was charged at a constant

current of 0.2 C until a cell voltage reached 4.2 V, and then charged at a constant voltage of 4.2 V until a current value reached 0.02 C. Then, the test cell was discharged at a constant current of 0.5 C until the cell voltage reached 2.5 V. In this time, direct-current resistance (DCIR) was calculated with the following formula from an open circuit voltage (OCV), a closed circuit voltage (CCV) after 10 seconds from the discharge, and a current value ($I_{10s}$) after 10 seconds from the discharge, and this value of DCIR was specified as an initial DCIR.

$$DCIR = (OCV - CCV)/I_{10s}$$

Under a temperature environment of 25°C, the test cell was charged at a constant current of 0.2 C until a cell voltage reached 4.2 V, and then charged at a constant voltage of 4.2 V until a current value reached 0.02 C. After left for stand for 10 minutes, the test cell was discharged at a constant current of 0.2 C until the cell voltage reached 2.5 V. This charge and discharge was specified as one cycle, and 100 cycles were performed.

The test cell after the 100 cycles was subjected to the charge-discharge cycle performed for the above test cell in the initial state, and DCIR was calculated to specify this value as a DCIR after the cycles. With the above initial DCIR and the DCIR after the cycles, a DCIR increasing rate was determined with the following formula.

$$\text{DCIR increasing rate} = \text{DCIR after cycles} / \text{Initial DCIR}$$

<Example 2>

A test cell was produced and evaluated in the same manner as in Example 1 except that, in the adding step in producing the positive electrode active material, an amount of lithium methanesulfonate added relative to the total mass of the lithium-containing composite oxide was 0.3 mass%.

<Example 3>

A test cell was produced and evaluated in the same manner as in Example 1 except that, in the adding step in producing the positive electrode active material, an amount of lithium methanesulfonate added relative to the total mass of the lithium-containing composite oxide was 0.5 mass%.

<Example 4>

A test cell was produced and evaluated in the same manner as in Example 1 except that, in the adding step in producing the positive electrode active material, an amount of lithium methanesulfonate added relative to the total mass of the lithium-containing composite oxide was 0.8 mass%.

<Example 5>

A test cell was produced and evaluated in the same manner as in Example 1 except that, in the adding step in producing the positive electrode active material, the amount of the lithium methanesulfonate added relative to the total mass of the lithium-containing composite oxide was 1 mass%.

<Example 6>

A test cell was produced and evaluated in the same manner as in Example 1 except that, in the adding step in producing the positive electrode active material, a methanesulfonic acid solution was added instead of the lithium methanesulfonate solution, and an amount of methanesulfonic acid added relative to the total mass of the lithium-containing composite oxide was 0.48 mass%. A concentration of the methanesulfonic acid solution added was 10 mass%, and the methanesulfonic acid solution was added so that the amount of the methanesulfonic acid added was as above. By Fourier transformation infrared spectrometry (FT-IR), the presence of lithium methanesulfonate on the surface of the positive electrode active material was confirmed. The average particle diameter of lithium methanesulfonate was 2 μm. In the positive electrode active material, the value of Y-X was 14 μmol/g, and the value of X-(Y-X) was 14 μmol/g.

<Example 7>

A test cell was produced and evaluated in the same manner as in Example 1 except that, in the adding step in producing the positive electrode active material, a sodium methanesulfonate solution was added instead of the lithium

methanesulfonate solution, and an amount of sodium methanesulfonate added relative to the total mass of the lithium-containing composite oxide was 0.5 mass%. A concentration of the sodium methanesulfonate solution added was 10 mass%.

<Comparative Example 1>

A test cell was produced and evaluated in the same manner as in Example 1 except that the adding step was not performed in the production of the positive electrode active material.

<Comparative Example 2>

A test cell was produced and evaluated in the same manner as in Example 1 except that, in the adding step in producing the positive electrode active material, a lithium succinate solution at 10 mass% was added instead of the methanesulfonic acid solution, and an amount of lithium succinate added relative to the total mass of the lithium-containing composite oxide was 0.5 mass%.

<Comparative Example 3>

A test cell was produced and evaluated in the same manner as in Example 1 except that, in the adding step in producing the positive electrode active material, a lithium oxalate solution at 10 mass% was added instead of the methanesulfonic acid solution, and an amount of lithium oxalate added relative to the total mass of the lithium-containing composite oxide was 0.5 mass%.

<Example 8>

A test cell was produced and evaluated in the same manner as in Example 1 except that: in the synthesis step in producing the positive electrode active material, the composition of the metal oxide was changed to $Ni_{0.35}Co_{0.30}Mn_{0.35}O_2$; and in the adding step, an amount of lithium methanesulfonate added relative to the total mass of the lithium-containing composite oxide was 0.5 mass%. By Fourier transformation infrared spectrometry (FT-IR), the presence of lithium methanesulfonate on the surface of the positive electrode active material was confirmed. The average particle diameter of lithium methanesulfonate was 2 μm. In the positive electrode active material, the value of Y-X was 14 μmol/g, and the value of X-(Y-X) was 15 μmol/g.

<Example 9>

A test cell was produced and evaluated in the same manner as in Example 8 except that, in the adding step in producing the positive electrode active material, a sodium methanesulfonate solution was added instead of the lithium methanesulfonate solution, and an amount of sodium methanesulfonate added relative to the total mass of the lithium-containing composite oxide was 0.5 mass%. A concentration of the sodium methanesulfonate solution added was 10 mass%.

<Comparative Example 4>

A test cell was produced and evaluated in the same manner as in Example 8 except that, in the production of the positive electrode active material, the adding step was not performed.

<Example 10>

A test cell was produced and evaluated in the same manner as in Example 1 except that: in the synthesis step in producing the positive electrode active material, the composition of the metal oxide was changed to $Ni_{0.65}Co_{0.15}Mn_{0.20}O_2$; and in the adding step, an amount of lithium methanesulfonate added relative to the total mass of the lithium-containing composite oxide was 0.5 mass%. By Fourier transformation infrared spectrometry (FT-IR), the presence of lithium methanesulfonate on the surface of the positive electrode active material was confirmed. The average particle diameter of lithium methanesulfonate was 2 μm. In the positive electrode active material, the value of Y-X was 22 μmol/g, and the value of X-(Y-X) was 20 μmol/g.

<Example 11>

A test cell was produced and evaluated in the same manner as in Example 10 except that, in the adding step in producing the positive electrode active material, a sodium methanesulfonate solution was added instead of the lithium methanesulfonate solution, and an amount of sodium methanesulfonate added relative to the total mass of the lithium-containing composite oxide was 0.5 mass%. A concentration of the sodium methanesulfonate solution added was 10 mass%.

<Comparative Example 5>

A test cell was produced and evaluated in the same manner as in Example 10 except that, in the production of the positive electrode active material, the adding step was not performed.

<Example 12>

A test cell was produced and evaluated in the same manner as in Example 1 except that the DCIR increasing rate was evaluated so that a constitutive pressure of $8.83 \times 10^{-2}$ MPa was applied to the electrode assembly of the test cell in the upper-lower direction in FIG. 1.

Table 1 to Table 4 separately show the DCIR increasing rates of the test cells of Examples and Comparative Examples. Table 1 to Table 3 also show the composition of the lithium-containing composite oxide, the added sulfonate compound, the addition method, and the addition amount. The DCIR increasing rates of the test cells of Examples 1 to 7 and Comparative Examples 2 to 3 in Table 1 are shown relative to the DCIR increasing rate of the test cell of Comparative Example 1 being 100. The DCIR increasing rates of the test cells of Examples 8 and 9 in Table 2 are shown relative to the DCIR increasing rate of the test cell of Comparative Example 4 being 100. The DCIR increasing rates of the test cells of Examples 10 and 11 in Table 3 are shown relative to the DCIR increasing rate of the test cell of Comparative Example 5 being 100. The DCIR increasing rates of the test cells of Examples 12 and 1 in Table 4 are shown relative to the DCIR increasing rate of the test cell of Comparative Example 1 being 100.

[Table 1]

| | Positive electrode active material | | | | | | Evaluation results |
|---|---|---|---|---|---|---|---|
| | Composition of lithium-containing composite oxide | | | Sulfonate compound | | | DCIR increasing rate |
| | Ni [mol%] | Co [mol%] | Mn [mol%] | Added compound | Adding method | Addition amount [mass%] | |
| Example 1 | 50 | 20 | 30 | Li methanesulfonate | Solution addition | 0.1 | 99 |
| Example 2 | 50 | 20 | 30 | Li methanesulfonate | Solution addition | 0.3 | 96 |
| Example 3 | 50 | 20 | 30 | Li methanesulfonate | Solution addition | 0.5 | 96 |
| Example 4 | 50 | 20 | 30 | Li methanesulfonate | Solution addition | 0.8 | 97 |
| Example 5 | 50 | 20 | 30 | Li methanesulfonate | Solution addition | 1.0 | 98 |
| Example 6 | 50 | 20 | 30 | Methanesulfonic acid | Solution addition | 0.48 | 96 |
| Example 7 | 50 | 20 | 30 | Na ethanesulfonate | Solution addition | 0.5 | 97 |
| Comparative Example 1 | 50 | 20 | 30 | - | - | - | 100 |

(continued)

| | Positive electrode active material | | | | | | Evaluation results |
|---|---|---|---|---|---|---|---|
| | Composition of lithium-containing composite oxide | | | Sulfonate compound | | | DCIR increasing rate |
| | Ni [mol%] | Co [mol%] | Mn [mol%] | Added compound | Adding method | Addition amount [mass%] | |
| Comparative Example 2 | 50 | 20 | 30 | Li succinate | Solution addition | 0.5 | 100 |
| Comparative Example 3 | 50 | 20 | 30 | Li oxalate | Solution addition | 0.5 | 102 |

[Table 2]

| | Positive electrode active material | | | | | | Evaluation results |
|---|---|---|---|---|---|---|---|
| | Composition of lithium-containing composite oxide | | | Sulfonate compound | | | DCIR increasing rate |
| | Ni [mol%] | Co [mol%] | Mn [mol%] | Added compound | Adding method | Addition amount [mass%] | |
| Example 8 | 35 | 30 | 35 | Li methanesulfonate | Solution addition | 0.5 | 98 |
| Example 9 | 35 | 30 | 35 | Na methanesulfonate | Solution addition | 0.5 | 99 |
| Comparative Example 4 | 35 | 30 | 35 | - | - | - | 100 |

[Table 3]

| | Positive electrode active material | | | | | | Evaluation results |
|---|---|---|---|---|---|---|---|
| | Composition of lithium-containing composite oxide | | | Sulfonate compound | | | DCIR increasing rate |
| | Ni [mol%] | Co [mol%] | Mn [mol%] | Added compound | Adding method | Addition amount [mass%] | |
| Example 10 | 65 | 15 | 20 | Li methanesulfonate | Solution addition | 0.5 | 94 |
| Example 11 | 65 | 15 | 20 | Na methanesulfonate | Solution addition | 0.5 | 95 |
| Comparative Example 5 | 65 | 15 | 20 | - | - | - | 100 |

[Table 4]

| | Constitutive pressure | DCIR increasing rate |
|---|---|---|
| Example 12 | $8.83 \times 10^{-2}$MPa | 97 |
| Example 1 | - | 99 |

In Table 1 to Table 3, the test cells of Examples exhibited a lower DCIR increasing rate than that of the test cells of Comparative Examples. Therefore, it is found that the non-aqueous electrolyte secondary battery with inhibited the increase in DCIR may be provided by using the positive electrode active material in which the sulfonate compound is present on the surface of the lithium-containing composite oxide having the predetermined composition. In Table 4, the test cell of Example 12 in which the constitutive pressure was applied exhibited a lower DCIR increasing rate than that of the test cell of Example 1. Therefore, it is found that the non-aqueous electrolyte secondary battery according to the present embodiment to which the constitutive pressure is applied more remarkably inhibits the increase in DCIR.

REFERENCE SIGNS LIST

10 Non-aqueous electrolyte secondary battery, 11 Exterior, 11a, 11b Laminate sheet, 12 Housing part, 13 Sealing part, 14 Electrode assembly, 15 Positive electrode lead, 16 Negative electrode lead, 20 Positive electrode, 21 Positive electrode current collector, 22 Positive electrode mixture layer, 30 Negative electrode, 31 Negative electrode current collector, 32 Negative electrode mixture layer, 40 Separator

## Claims

1. A positive electrode active material for a non-aqueous electrolyte secondary battery, including:

    a lithium-containing composite oxide having a layered rock-salt structure; and
    a sulfonate compound present on a surface of the lithium-containing composite oxide, wherein
    the lithium-containing composite oxide contains greater than or equal to 25 mol% and less than or equal to 75 mol% of Ni, greater than or equal to 15 mol% and less than or equal to 40 mol% of Co, and greater than or equal to 5 mol% and less than or equal to 50 mol% of Mn, relative to a total number of moles of metal elements excluding Li, and
    the sulfonate compound is represented by the following formula I:

    [Formula 1]

    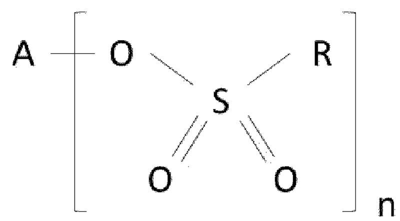

    (I)

    wherein A represents a group I element or a group II element, R represents a hydrocarbon group, and "n" represents 1 or 2.

2. The positive electrode active material for a non-aqueous electrolyte secondary battery according to claim 1, wherein the A represents a group I element.

3. The positive electrode active material for a non-aqueous electrolyte secondary battery according to claim 1, wherein the A represents Li.

4. The positive electrode active material for a non-aqueous electrolyte secondary battery according to any one of claims 1 to 3, wherein the R represents an alkyl group.

5. The positive electrode active material for a non-aqueous electrolyte secondary battery according to any one of claims 1 to 3, wherein the R represents a methyl group.

6. The positive electrode active material for a non-aqueous electrolyte secondary battery according to any one of claims 1 to 5, wherein an amount of the sulfonate compound present on the surface of the lithium-containing composite oxide is greater than or equal to 0.1 mass% and less than or equal to 1 mass% relative to a mass of the lithium-containing composite oxide.

7. The positive electrode active material for a non-aqueous electrolyte secondary battery according to any one of claims 1 to 6, wherein the positive electrode active material has an absorption peak at at least greater than or equal to one position near 1238 $cm^{-1}$, 1175 $cm^{-1}$, 1065 $cm^{-1}$, or 785 $cm^{-1}$ in an infrared absorption spectrum.

8. The positive electrode active material for a non-aqueous electrolyte secondary battery according to any one of claims 1 to 7, wherein an average particle diameter of the sulfonate compound is less than or equal to 10 $\mu$m.

9. The positive electrode active material for a non-aqueous electrolyte secondary battery according to any one of claims 1 to 8, wherein,
when a filtrate of a water dispersion in which 1 g of the positive electrode active material for a non-aqueous electrolyte secondary battery is dispersed in 70 ml of pure water is titrated with hydrochloric acid, a value of Y-X is less than or equal to 130 $\mu$mol/g and a value of X-(Y-X) is less than or equal to 130 $\mu$mol/g, wherein an amount of a consumed acid until a first inflection point on a pH curve is represented by X mol/g, and an amount of a consumed acid until a second inflection point is represented by Y mol/g.

10. A method for manufacturing a positive electrode active material for a non-aqueous electrolyte secondary battery, the method including:

a synthesis step of mixing and calcining: a metal oxide containing greater than or equal to 25 mol% and less than or equal to 75 mol% of Ni, greater than or equal to 15 mol% and less than or equal to 40 mol% of Co, and greater than or equal to 5 mol% and less than or equal to 50 mol% of Mn; and a Li compound to obtain a lithium-containing composite oxide; and
an adding step of adding at least one of a sulfonate compound solution and a sulfonic acid solution to the lithium-containing composite oxide.

11. A positive electrode for a non-aqueous electrolyte secondary battery, including the positive electrode active material for a non-aqueous electrolyte secondary battery according to any one of claims 1 to 9.

12. A non-aqueous electrolyte secondary battery, comprising:

the positive electrode for a non-aqueous electrolyte secondary battery according to claim 11;
a negative electrode; and
a non-aqueous electrolyte.

13. The non-aqueous electrolyte secondary battery according to claim 12, wherein a pressure of greater than or equal to $8\times10^{-2}$ MPa is applied.

Figure 1

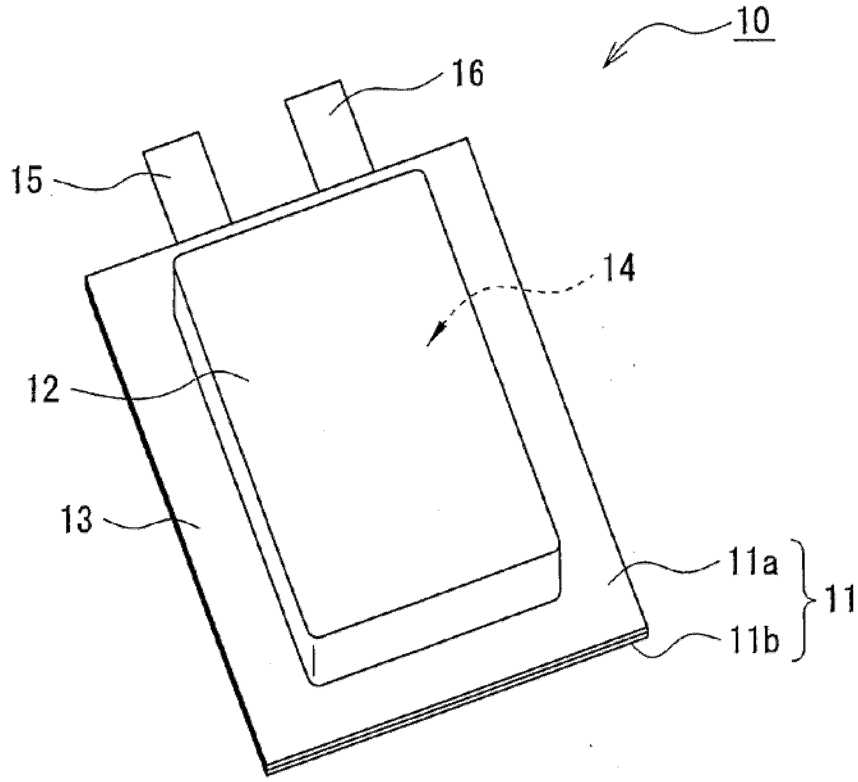

Figure 2

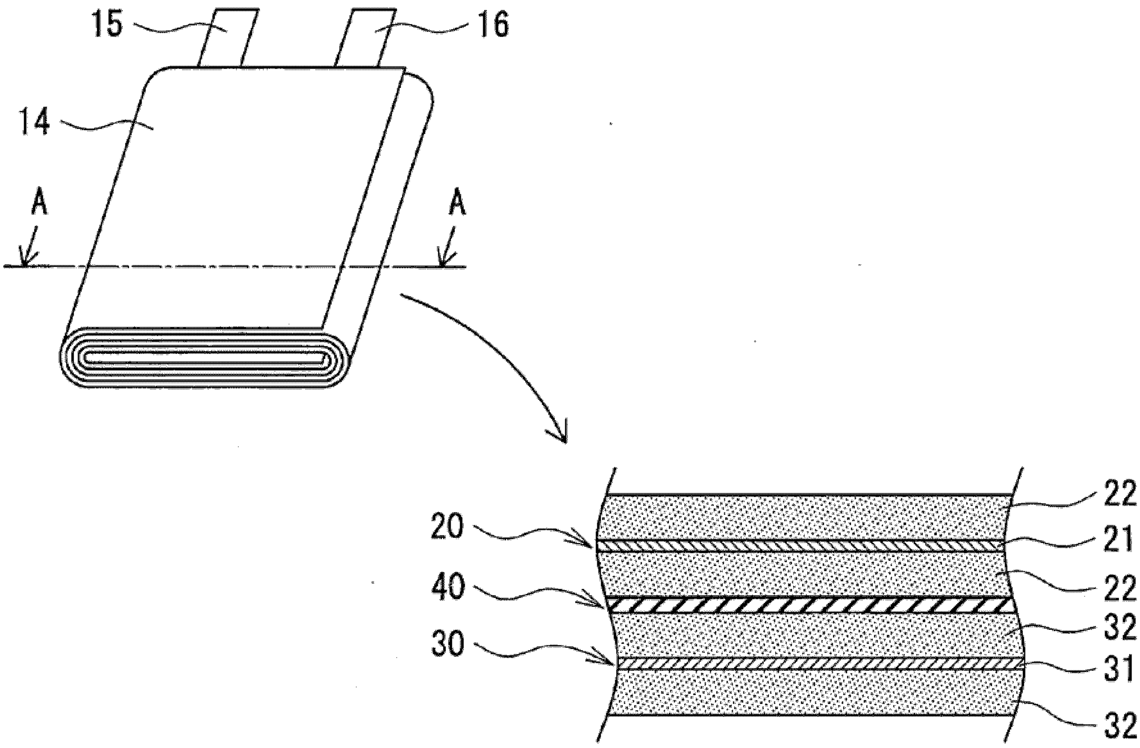

## INTERNATIONAL SEARCH REPORT

International application No. **PCT/JP2023/004520**

**A. CLASSIFICATION OF SUBJECT MATTER**

***H01M 4/525***(2010.01)i; ***C01G 53/00***(2006.01)i; ***H01M 4/36***(2006.01)i; ***H01M 4/505***(2010.01)i; ***H01M 10/052***(2010.01)i; ***H01M 10/058***(2010.01)i

FI: H01M4/525; C01G53/00 A; H01M4/36 C; H01M4/505; H01M10/052; H01M10/058

According to International Patent Classification (IPC) or to both national classification and IPC

**B. FIELDS SEARCHED**

Minimum documentation searched (classification system followed by classification symbols)

H01M4/525; C01G53/00; H01M4/36; H01M4/505; H01M10/052; H01M10/058

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 109616657 A (LANGFANG INSTITUTE OF PROCESS ENGINEERING, CAS) 12 April 2019 (2019-04-12)<br>paragraph [0010], example 4 | 1-5, 7-9, 11-12 |
| Y | paragraph [0010], example 4 | 10, 13 |
| A | | 6 |
| X | JP 2019-169286 A (TDK CORP) 03 October 2019 (2019-10-03)<br>paragraph [0019], examples 15-16 | 10 |
| Y | paragraph [0019], examples 15-16 | 10 |
| A | | 6 |
| Y | WO 2016/088535 A1 (KABUSHIKI KAISHA TOYOTA JIDOSHOKKI) 09 June 2016 (2016-06-09)<br>claims | 13 |
| A | | 6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 April 2023** | **25 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/004520**

| Patent document cited in search report | Publication date (day/month/year) | Patent family member(s) | Publication date (day/month/year) |
|---|---|---|---|
| CN 109616657 A | 12 April 2019 | (Family: none) | |
| JP 2019-169286 A | 03 October 2019 | (Family: none) | |
| WO 2016/088535 A1 | 09 June 2016 | US 2017/0309873 A1<br>claims<br>DE 112015005478 T | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018006164 A